# EUROPEAN PATENT SPECIFICATION

(11) **EP 4 206 602 B1**
(45) Date of publication and mention of the grant of the patent: **11.09.2024**
(21) Application number: 22460081.7
(22) Date of filing: 30.12.2022
(51) Int. Cl.: F28D 20/02, F24F 5/00, F25D 3/00, F25D 17/02

(54) **DEVICE FOR STORAGE OF ENERGY, IN PARTICULAR COOLING ENERGY, AND THE METHOD OF COOLING THE DEVICE FOR STORAGE OF ENERGY, IN PARTICULAR COOLING ENERGY, AS WELL AS THE SPECIFIC USE OF THE DEVICE FOR STORAGE OF ENERGY**
VORRICHTUNG ZUR SPEICHERUNG VON ENERGIE, INSBESONDERE KÄLTEENERGIE, UND VERFAHREN ZUR KÜHLUNG
DISPOSITIF DE STOCKAGE D'ÉNERGIE, EN PARTICULIER D'ÉNERGIE DE REFROIDISSEMENT, ET PROCÉDÉ DE REFROIDISSEMENT

(30) Priority: 30.12.2021 PL 44005921
(43) Date of publication of application: 05.07.2023
(73) Proprietor: Wentima, Michal Wojsa, 53-030 Wroclaw (PL)
(72) Inventor: WOJSA, Michal, 53-136 Wroclaw (PL)

(56) References cited:
- DE-A1- 10 201 591
- US-A- 5 036 904
- US-A1- 2016 161 132

## Description

The subject of the invention is a Device for storage of energy, in particular cooling energy, and the method of cooling the device for storage of energy, in particular cooling energy, as well as the specific use of the device for storage of energy. The invention is applicable to cyclic freeze-up, i.e. the generation and build-up of ice and its use for refrigeration purposes, when there is an increased demand for cooling power in systems, such as air conditioning or freezing. The application may also include refrigeration or freezing devices that do not operate permanently, but the time and/or duration of their use requires an additional supply of cold that cannot be obtained during standard operation of such equipment. The solution is a particular development of a previously filed invention for protection under number P.439045, under the same title.

Devices for making and maintaining a permanent layer of ice are known to the general public. The systems used for this are, as a rule, heat exchangers, where the principle of refrigerant circulation is a pipe system, more or less extensive, in the form of pipe serpentines, with additional pipe connections. The systems may additionally have a manifold and a dedicated number of valves.

A device using a similar principle of operation, in particular the circulation of the refrigerant through the interior of the piping system, is the ice-making and ice-storage device described in Polish Patent No. Pat.235695. A known solution reveals an arrangement of two pipe heat exchangers that overlap, being connected by flow channels. The ice mass builds up on the outside of the pipe system arranged in this way.

From the Polish patent number Pat.207416, a cascade, two-stage refrigeration system is known, containing a thermoelectric module of a high-temperature cooling stage, thermoelectric modules of a low-temperature cooling stage, an interstage cold accumulator and a flow heat exchanger. The interstage cold accumulator consists of two horizontal plates - heat exchangers - upper and lower, separated by a working agent, where the upper exchanger has a concave, conical or spherical inner working surface, and the lower exchanger has a convex inner working surface. Both exchangers are mounted in the body and set coaxially with respect to each other and the body. The exchangers are mounted in a body filled with a working fluid, made of a material with low thermal conductivity, and they are arranged coaxially with respect to each other and the body. The working fluid, as a rule, is designed to freeze over and produce ice from it, which builds up between the plate top and bottom exchangers. The method of operation of the interstage cold accumulator known from this patent is that continuous thermal contact between the ice and the low-temperature stage is maintained, and the operation of the high-temperature stage is carried out in a cyclic cooling-heating mode, and the ice is cyclically formed in the form of layers, and between freezing cycles, thermal de-icing of the formed ice layer is carried out until the beginning of its ascent, ensuring its ascent before the melting of the previous ice layer is completed.

Other energy storage devices are disclosed in US-A-5036904 and DE-A-10201591.

For exchangers that are intended as cold accumulators in which the refrigerant, either liquid or gas, flows through a pipe system, the ice is frozen up outside this pipe system, and builds up around each pipe starting from the immediate vicinity of the pipe around which the water being frozen-up is located. Then, the ice being frozen-up usually increases in volume at a slower and slower rate, because, as it moves away from the pipe, and therefore away from the refrigerant flowing through the pipe, its impact on the water surrounding the pipe system decreases. The role of the chilling agent is taken on by the ice that has already formed around the pipe. Cold propagation therefore decreases with the passage of time, hence the rate of freezing up of the ice in the exchanger also decreases. Notwithstanding the inconvenience of decreasing the rate at which water is converted into ice, the unfavourable temperature distribution in the tank containing the water to be converted into ice may be increased, of which this generally applies to temperature irregularities at specific but different points in the water tank due to circulation obstacles. This can further slow down the build-up of ice.

In view of the above-mentioned structures, as well as the methods of cold accumulation disclosed by their design, and also in view of the prior invention applied for legal protection under No. P.439045, it has become apparent that it is possible to improve the claimed invention, thereby ensuring both the security of a uniform ice build-up over time, and a reproducible and precisely time-predictable method of this build-up will be ensured, which method translates into long-term constancy of the parameters and operation of the system, with the possibility of significantly accelerating the processes of cold accumulation and recovery, and even extending these possibilities and speed by carrying out both the build-up and recovery of cold from the accumulated ice carrier at the same time. All of these processes will maintain a low probability in terms of service needs due to plant damage, whether mechanical or process, or service needs due to the high frequency of replenishment of utilities in the plant.

This is achieved with the device according to the present invention, which combines the possibility of using an unexpected refrigerant circuit with respect to previously known solutions, with methods already known and used previously. As a general rule, such a combination was not known, either in terms of construction, process or specific application according to the present invention.

A device, according to the present invention, for storage of energy, in particular cooling energy, is provided with a tank, preferably a circulation pump, and a heat exchanger, of which heat exchanger at least one cold accumulator located in the tank is a component. It is powered in terms of refrigeration by a cooling liquid refrigerant which is a carrier of the cold. In the tank, at least one cold accumulator is located, each enclosed by a mantle in the form of a spatial solid made of a thermal conductor, which spatial solid is filled with water and an air or vacuum buffer supplementary to 100% of this filling, wherein the mantles of multiplied cold accumulators are, preferably inseparably and at a distance connected to the tank and/or to each other, and the distance between the mantles of the adjacent cold accumulators preferably ranges from 2mm to 150mm, wherein the tank is filled with a liquid refrigerant as a cold carrier, which refrigerant constitutes the environment of all the mantles of the cold accumulators contained in the tank, and wherein the liquid refrigerant constitutes the freezing thermal circuit of the cold accumulators bounded by their mantles. The invention is characterised in that the mantle surrounding the cold accumulator is a first mantle of said cold accumulator, while inside the first mantle, at a distance therefrom, still preferably by being connected by at least one thermal bridge, there is at least one second mantle of the same cold accumulator, wherein the outer environment of the second mantle is the cold accumulator, and the inner environment of the kind of filling of the second mantle is a refrigerant supplied and discharged by the second mantle from the outside of the cold accumulator, wherein the second mantle has a tubular entrance, and has a tubular exit connecting the second mantle to the freezing thermal circuit.

Preferably, the volume of the tank is not more than twice the volume of all the first cold accumulator mantles embedded in it.

Preferably, the liquid refrigerant constituting the freezing thermal circuit of the cold accumulators bounded by their mantles is directed by valves, at least one pair of valves, and preferably even three pairs of valves.

Preferably, the tank has at least one vestibule by which the external environment of the tank is separated from its refrigerant-containing chamber proper, the vestibule being at least one manifold.

Preferably, with two or more vestibules, at least one is a supply manifold, and at least the other is a return manifold.

Preferably, the manifold is separated from the chamber proper of the tank by a baffle, respectively the supply manifold by the first baffle and the return manifold by the second baffle.

Preferably, the mantles are incompletely submerged in liquid refrigerant.

Preferably, for every 1m³ of volume of all cold accumulators cooled in the tank, there is between 0.01m³ and 0.9m³ of refrigerant.

Preferably, the circulation pump is fixed in the tank, preferably permanently, being connected to the tank.

Preferably, the circulation pump is mounted outside the tank, and has a connection via a circulation duct with inlet and outlet pipes, to the tank and/or with a tubular inlet and a tubular outlet via the inlet port and the outlet port of the tank. Preferably, the inlet and outlet ports are positioned at opposite ends of the tank wall, the same tank wall, or on opposite tank walls, with the inlet preferably at the bottom of the tank, and the outlet preferably at the top of the tank.

Preferably, the tubular inlet and the tubular outlet are located next to each other in the same tank wall and/or in the same manifold baffle or interchangeably on opposite tank walls and/or in other manifold baffles.

Preferably, the tank is fitted with at least one rotor having blades, the rotor being fixed permanently, but preferably adjustable inside the tank.

Preferably, the tank is openable from the top, and is fitted with a lid, the lid being preferably attached to the tank via a stub pipe, preferably flexible one.

Preferably, at least one outer spacer insert is provided between the first mantle and the tank, preferably the spacer insert being connected to them disjointly.

Preferably, at least one inner spacer insert is provided between adjacent first mantles of the cold accumulators, preferably the spacer insert being connected to them disjointly.

Preferably, the inner spacer insert and/or the outer spacer insert is openwork.

Preferably, the inner spacer insert and/or the outer spacer insert is positioned with respect to the tank and/or with respect to the first mantle either spirally or in a labyrinth arrangement.

Preferably, the tank is fitted with at least one vertical baffle attached by its bottom edge to the bottom of the tank and by at most one lateral edge to the side wall of the tank, the vertical baffles being preferably positioned in the tank alternately, preferably with an offset.

Preferably, the tank is be provided with at least one horizontal baffle, uninterruptedly attached by its edges, preferably for at least 75% of their full circumference, to the rounded wall or straight side walls of the tank, the horizontal baffles being preferably arranged alternately, preferably with an offset, in the tank.

Preferably, the tank is in the form of a cylinder with a circular or elliptical bottom, or in the form of a cuboid with a rectangular bottom, or in the form of a prism with a polygonal bottom, preferably regular, or in the form of a cylinder with an annular cross-section.

Preferably, the first mantle and/or the second mantle in the shape of a spatial solid is in the form of a with a circular or elliptical bottom, or in the form of a cuboid with a rectangular bottom, or in the form of a prism with a polygonal bottom, preferably regular, or in the form of a cylinder with an annular cross-section.

Preferably, the spatial solid of the first mantle is closed, and is provided with a filling valve and a vent valve.

Preferably, the bottom of the spatial solid of the first mantle is also a section of the bottom of the tank.

Preferably, the spatial solid of the first mantle is positioned in the tank relative to the bottom of the tank in a vertical, or horizontal, or intermediate position, preferably vertical with a possible deviation from vertical of not more than 25° of angular measure, and at the same time the second mantle is positioned in the first mantle in an adequate position, where the mantles are preferably coaxially positioned relative to each other.

Preferably, the spatial solid of the first mantle in its cross-section has a longest diagonal not longer than 60cm, but preferably not shorter than 10cm.

Preferably, the spatial solid of the second mantle in its cross-section has a longest diagonal not longer than 10cm, but preferably not shorter than 1cm, however, not longer than 25% of the diagonal length of the first mantle.

Preferably, the spatial solid of the first mantle in its longitudinal cross-section has a longest diagonal not longer than 300cm, but preferably not shorter than 50cm.

Preferably, the spatial solid of the second mantle in its longitudinal cross-section has a longest diagonal not longer than 95% of the longitudinal diagonal length of the first mantle, but preferably not shorter than 50%.

Preferably, the wall thickness of the first mantle and the second mantle is no greater than 4mm.

Preferably, the first mantle on the inner side is fitted with tabs, either flat or rod-like, which increase the inner surface of the mantle.

Preferably, in the first mantle, on its inner side, cores are mounted, spaced vertically, being non-absorbent, but highly flexible, which are compensators for the pressure force of the cold accumulator in its phase transformation.

Preferably, in the first mantle, on its inner side, inserts are mounted, horizontally sliding, non-absorbable but strongly elastic, which are compensators for the evaporative force of the cold accumulator in its phase transformation, preferably their number is multiplied to at least two, and starting from the second one they preferably are distributed in the first mantle at distances from the upper base and the lower base in proportion, the first one preferably being fixed on the base of the lower spatial solid of the first mantle.

Preferably, the tank is a sealed pressure chamber, and it is equipped with at least one sealing insert, preferably also being a spacer insert.

Preferably, the sealing insert is connected to the spatial solids of the mantles of the first cold accumulators.

Preferably, the tank is made of thermally insulating material or is padded with thermally insulating material.

Preferably, the refrigerant is an aqueous glycol solution or brine or alcohol or a solution thereof.

Preferably, the first mantle is filled with water in an amount of no more than 90% of the volume of the spatial solid of the first mantle.

Preferably, the first mantle is provided internally with ice micro-radicals, preferably freely movable, or stationary, in the first mantle and/or in the water filling thereof, the volume amount of the ice micro-radicals preferably not exceeding 5% of the volume of the spatial solid of the mantle.

Preferably, up to 100 cold accumulators bounded by their own mantles are placed in a single tank, the first mantles of which are preferably embedded in the tank by means of inner spacer inserts and outer spacer inserts, which are elements fixing the position of the cold accumulators relative to the tank, and relative to each other.

A method of cooling the device for storage of energy according to the present invention, in particular cooling energy, in which device continuous thermal contact between the water being transformed into ice , i.e. for its liquid and solid states of aggregation, and the refrigerant supplying the cold, via a thermal conductor is maintained, and the transformation of water from its liquid state to its solid state of aggregation and vice versa is carried out in a cyclic mode, wherein one from water to ice when accumulating cold, and one from ice to water when discharging the cold, is based on the fact that ice is formed during accumulation first in the immediate vicinity of the thermal conductor, in the vicinity of which the refrigerant flows tangentially. Water in both its liquid and solid states of aggregation, constituting a cold accumulator bounded externally in each case by a first mantle made of a thermal conductor, is thermally contacted and held on the inside of each first mantle which is previously filled with it. When cooling the cold accumulator, once ice has been formed in the immediate vicinity of the first mantle, in the form of a ring similar in size, but with a smaller axial dimension in relation to the first mantle, it is further cooled down by producing ice axially towards the inside of the cold accumulator while at the same time producing successive layers of ice with successively smaller axial ring dimensions in relation to the axial size of the first mantle of the individual cold accumulator. The cold is supplied to the cold accumulators by washing over their first mantles from the outside with liquid refrigerant collected and flowing as a free stream through the tank. It is beneficial to force the circulation of this stream. At least one cold accumulator is cooled down in one tank, and the refrigerant is maintained in a liquid state of aggregation and at a temperature above its freezing point, preferably the refrigerant is maintained at a substantially constant temperature, but the temperature of the refrigerant is simultaneously maintained as being below 0°C. The method is characterised in that the cold is additionally supplied to the cold accumulator by washing over the interior of at least one second mantle of the same cold accumulator with refrigerant by passing the refrigerant through this second mantle located inside the cold accumulator, whereby said refrigerant is supplied and said refrigerant is discharged from the exterior of the cold accumulator by means of a tubular inlet and a tubular outlet respectively, supplying the second mantle from the freezing thermal circuit.

Preferably, the ice is formed in the immediate vicinity of the second mantle, in the form of a ring similar in size but with a larger axial dimension relative to the second mantle, and it is subsequently cooled down by producing ice axially towards the outside of the cold accumulator while producing successive layers of ice with successively larger axial ring dimensions relative to the axial size of the second mantle of the individual cold accumulator

Preferably, for every 1m³ of volume of all cold accumulators cooled in the tank, between 0.01m³ and 0.9m³ of refrigerant operating in the tank outside the first mantles of the cold accumulators, respectively, is used to cool them down.

Preferably, the temperature of the refrigerant is kept at a constant lower than -1°C, preferably lower than -6°C.

Preferably, the refrigerant is supplied to the tank and/or to the inside of the second mantle after cooling, preferably by pipes, with the supplied refrigerant being discharged through a supply pipe after cooling and the supplied refrigerant being discharged through a discharge pipe after use.

Preferably, the refrigerant is supplied to the tank and/or the inside of the second mantle during the cooling process, i.e. on an ongoing basis with simultaneous stream exchange.

Preferably, refrigerant cooling is carried out in an external, self-contained heat exchanger, operating for the purposes of the cooling process of the cold accumulators.

Preferably, the circulation of the liquid refrigerant is forced by a circulating pump and/or an impeller equipped with blades.

Preferably, the forcing of the liquid refrigerant through the tank and/or through the interior of the second mantle is carried out by a laminar flow, preferably at a later stage of the process.

Preferably, the forcing of the liquid refrigerant through the tank and/or through the interior of the second mantle is carried out by a turbulent flow, preferably at an early stage of the process.

Preferably, the stream washing over the first mantles of the cold accumulators flows through the tank along a serpentine path, using the spaces between the vertical baffles and/or the spaces between the horizontal baffles and/or the spaces between the inner inserts and/or the outer inserts and/or the openwork spaces.

Preferably, an aqueous solution of glycol or brine or alcohol or a solution thereof is used as a refrigerant.

Preferably, the first mantle on the inside and the second mantle on the outside are filled with water in an amount of no more than 90% of the volume of the spatial solid of the first mantle.

Preferably, the freezing up of the ice during cold accumulation is carried out by means of ice micro-radicals, preferably freely moved and/or stationary in the first mantle and/or in the water filling thereof, using a volume amount of ice micro-radicals preferably not exceeding 5% of the volume of the first mantle.

Preferably, up to 100 cold accumulators are used in a single tank, limiting them spatially on the outside by their own first mantles and on the inside by their own second mantles, their position relative to the tank and to each other being determined by embedding the first mantles in the tank through internal spacer inserts and external spacer inserts.

Preferably, between 15,000kJ and 15,000,000kJ of cooling energy is accumulated in all cold accumulators operating in a single tank.

Preferably, a pressure of between 1atm and 6atm is maintained in the tank and/or cold accumulators and/or inside the second mantle.

The application of the device for storage of energy, in particular cooling energy, with cyclic freeze-up, i.e. the generation and build-up of ice, wherein the device and/or the method shown above is used, is characterised in that during the cold accumulation, i.e. during the transformation of water into ice, the same device is used for discharging the cold, i.e. water is simultaneously obtained from the accumulated ice during the reverse transformation.

Preferably, cooled refrigerant with a temperature of less than 0°C is used to supply the cold, and it is supplied to the outer environment of the first mantle, while previously used and now heated refrigerant with a temperature of more than 0°C is used to recover the cold, and it is supplied to the inner environment of at least one of the second mantles.

Preferably, the first mantle is used to build up ice in the cold accumulator, and at least one second mantle is used to melt the ice.

Preferably, cooled refrigerant with a temperature of less than 0°C is used to supply the cold, and it is supplied to the inner environment of at least one of the second mantles, while a previously used and now heated refrigerant with a temperature of more than 0°C is used to recover cold, and is supplied to the outer environment of the first mantle.

Preferably, at least one second mantle is used to build up ice in the cold accumulator, and the first mantle is used to melt the ice.

Preferably, conducting the transformation in a cyclic mode, preferably daily, periodic intervals of simultaneous operation are used, during which the device is used in either standard process accelerator mode of accelerated full accumulation or accelerated full discharge, respectively, and during these periodic intervals a hybrid mode is used.

The advantages according to the inventions are as follows:
- thanks to inventions in design and handling, the cold accumulator battery unexpectedly freezes very quickly, and the refrigerant is not blocked from flowing, which has an impact on the performance of the bed;
- the bed is used when there is an increased demand for cooling and regenerated by freezing, with a reduced demand for cold transferred to downstream tasks;
- this appears to be the best possible solution, and thus much more precise in its applications than currently known technologies;
- additionally and unexpectedly, thanks to the switching sequence, the system can be adapted in advance to a predefined application under strictly defined conditions;
- above all, however, for the given operating parameters of the device, thanks to the uninterrupted process of cooling and accumulative freezing up of the ice, it is possible to calculate both the necessary process time and the accumulated cold in the form of ice quite precisely - because the ice obtains a precisely designed volume, it does not block the flow of the refrigerant in any way, which also precisely operates at a given temperature around the mantles of the ice accumulators, i.e. the cold accumulators; knowing the conductivity of the mantles, the cold supplied by the refrigerant transfers its cooling potential to the ice which will remain in anticipation due to the hermetic pressure and/or pressure-free structure of the tank and the ice accumulators; the amount of cold that can be discharged will not be insufficient, as the threshold of confidence in the accumulation achieved by the device and the method according to the present invention will be significantly increased.

An unexpected advantage of the solution according to the invention is also the possibility of using the same design of heat accumulation device with an appropriately selected refrigerant and a substance crystallising due to phase transformation, in which case the cycle can be carried out using accumulation and discharge temperatures other than those for the cold respectively.

After exemplary realisations of the solution according to the invention, it has been confirmed that the advantages of the invention make it possible to achieve an extremely high and reproducible, and rapidly realisable performance of the bed comprising cold accumulators, namely between 320,000 and 360,000 kJ/m³ of such an accumulation bed.

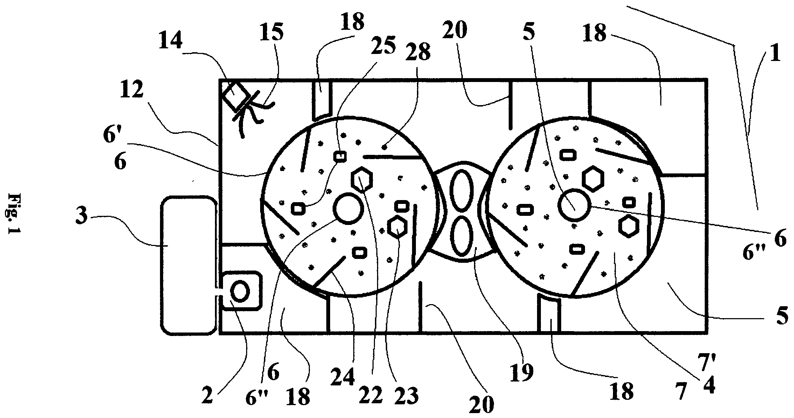

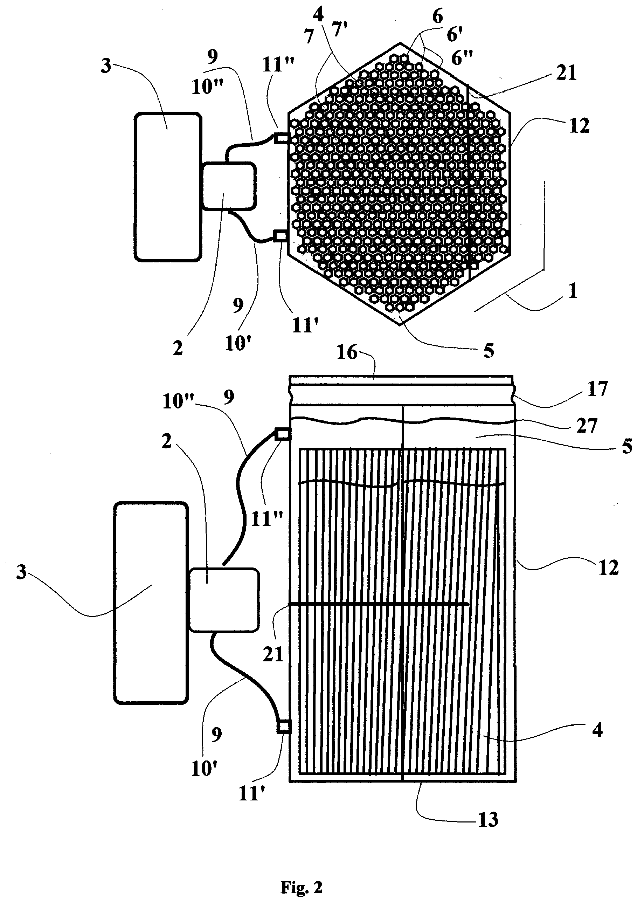

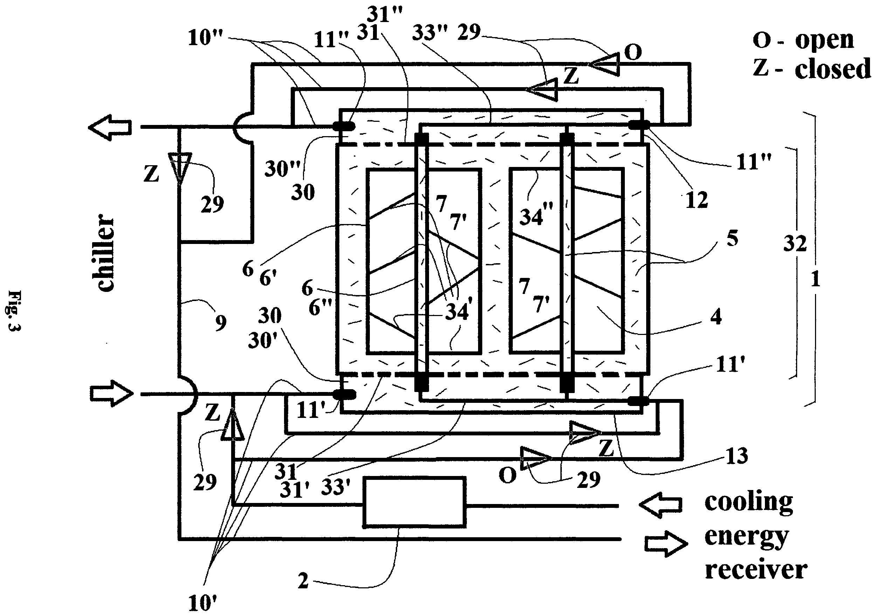

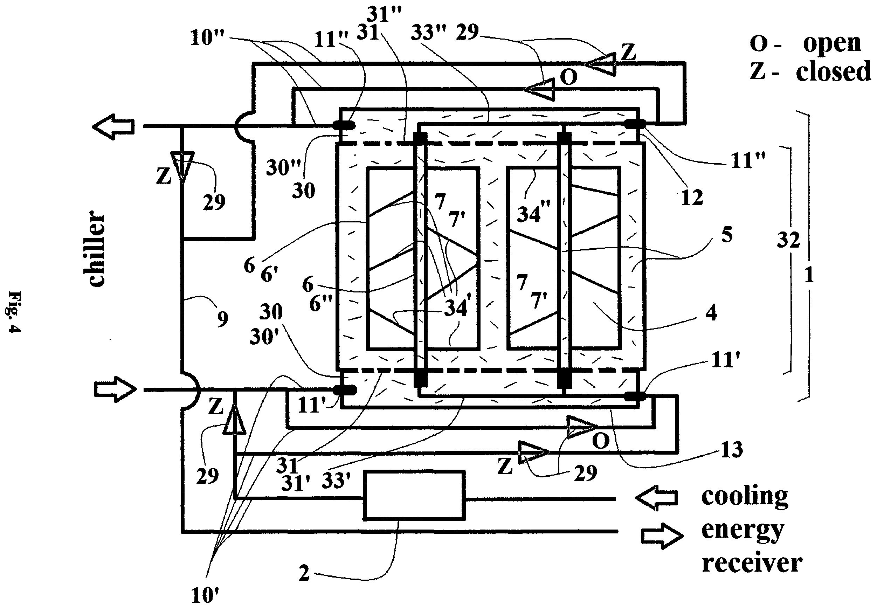

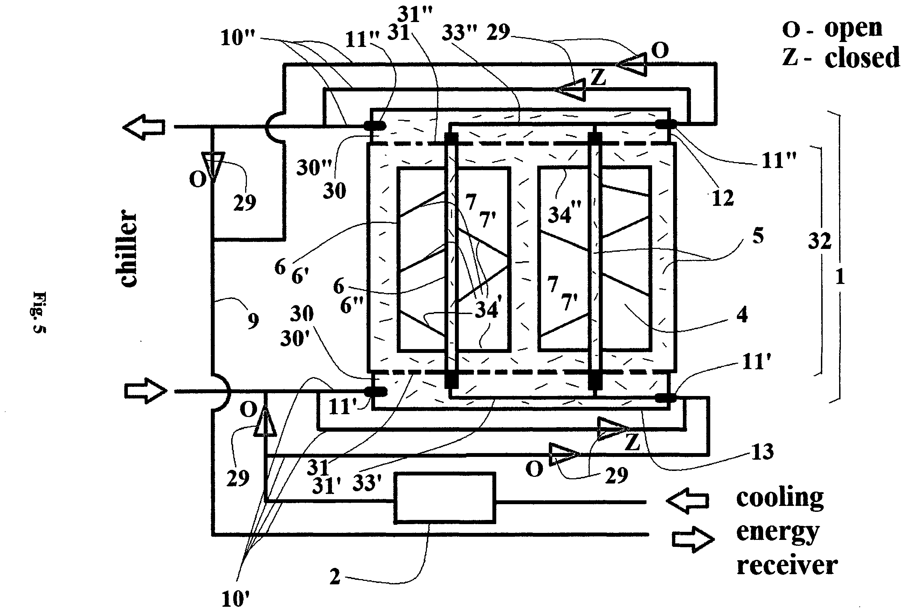

The solution is illustrated in the manufacturing example, also in the drawing in which Fig. 1 depicts the device of the first manufacturing example from above and in profile along the long wall of the tank, in light cross-section of the walls revealing the contents of the tank, Fig. 2 shows the device of the second example made from above and in profile along the long wall of the tank, in light cross-section of the walls revealing the content of the tank, wherein only the main differences of the structure with respect to the first example are shown, without depicting the elements that have not been changed and might not be identifiable due to the multiplicity of mantles, Fig. 3 is a schematic representation of the refrigerant circuit of the structure of the third example and its particular use of the hybrid mode, together with the shown valves and their settings, through which the first and the second mantles are connected to the refrigerant circuit of the whole system, so that for the accumulation of ice in the cold accumulators the first mantles are used, and for the melting of the ice the second mantles are used, while Fig.4 depicts schematically the refrigerant circuit for the structure of the third example and the particular use therein of the simultaneous mode, that is, for the mode of accelerator of standard processes, this time of accelerated full accumulation without the participation of the cooling energy receiver, together with the shown valves and their settings, through which the first mantles and the second mantles are connected to the refrigeration circuit of the whole system so that for the ice build-up in the cold accumulators both the first mantles and the second mantles are used at the same time, which is in accordance with the method of the first example described in more detail, and finally Fig. 5 depicts schematically the refrigerant circuit for the structure of the third example and the particular application therein of the simultaneous mode, i.e. for the standard process accelerator mode, this time of accelerated full discharge without the involvement of the chiller, together with the valves shown and their settings, through which the first and second mantles are connected to the refrigerant circuit of the entire system so that both the first mantles and the second mantles are used at the same time to melt the ice in the cold accumulators.

The exemplary device for storage of energy, in particular cooling energy, is equipped with the tank 1, the circulating pump 2 and the heat exchanger 3 of which heat exchanger at least one cold accumulator 4 located in the tank 1 is a component. It is powered in terms of refrigeration by the cooling liquid refrigerant 5 which is a carrier of the cold. At least one cold accumulator 4 is placed in the tank 1, this time there are precisely two of them, and each one is bounded by the mantle 6 in the form of a spatial solid made of a thermal conductor, which spatial solid is filled with water 7 and an air buffer supplementing up to 100% of this filling. The mantles 6 of the multiplied cold accumulators 4 are inseparably and at a distance connected to the tank 1 and to each other, of which at a distance with respect to the walls 12 of the tank 1 and with respect to the adjacent mantles 6, while directly with respect to the bottom 13 of the tank 1 this time by their lower bases, and the distance between the mantles 6 of the adjacent cold accumulators 4 ranges from 2mm to 150mm, this time 150mm. The tank 1 is filled with liquid refrigerant 5 as a cold carrier, which refrigerant 5 forms the surroundings of all mantles 6 of the cold accumulators 4 located in the tank 1. The mantles 6 are incompletely submerged in the liquid refrigerant 5, this time the refrigerant 5 washes over them up to 90% of their height, while the liquid refrigerant 5 simultaneously constitutes the freezing thermal circuit of the cold accumulators 4 bounded by their mantles 6. The mantle 6 surrounding each cold accumulator 4 is the first mantle 6' of that cold accumulator 4, while inside the first mantle 6', at a distance therefrom, but by means of the metal thermal bridges 34, being this time and each time the bottom 34' and the cap 34" of the cold accumulator 4 to be formed, there is the second mantle 6" of the same cold accumulator 4, wherein the outer environment of the second mantle 6" is the cold accumulator 4, and the inner environment in the kind of filling of the second mantle 6" is the refrigerant 5 supplied and discharged by the second mantle 6" from the outside of the cold accumulator 4, wherein the second mantle 6" has a tubular input 33' and has a tubular output 33" connecting the second mantle 6" to the freezing thermal circuit.

The volume of tank 1 is no more than twice the volume of all the mantles of the first mantles 6' of the cold accumulators 4 embedded in it, this time being 1.99 times, while for every 1m³ of volume of all the cold accumulators 4 cooled in tank 1, there is between 0.01m³ and 0.9m³ of refrigerant 5, this time precisely 0.9m³. The liquid refrigerant 5 constituting the freezing thermal circuit of the cold accumulators 4 bounded by their mantles 6', 6" is directed by valves 29, at least one pair of valves 29, and preferably even three pairs of valves 29, this time three. The circulation pump 2 is permanently fixed in the tank 1, inside it on the side wall 12, being connected to the tank 1 by a screw connection. The tank 1 is fitted with the single impeller 14 having helically mounted profiled blades 15, and it is fixed permanently but adjustable inside the tank 1, forcing the refrigerant 5 to circulate omnidirectionally relative to the tank 1. The tank1 is openable from the top, and is fitted with the lid 16, the lid 16 being attached to the tank 1 via the flexible stub pipe 17. One outer spacer insert 18 is provided between each first mantle 6' and the tank 1, at the bottom of the tank 1 and halfway up the tank 1, and they are connected to the tank 1 and the first mantles 6' at the bottom of the tank 1 inseparably, and at the halfway up the tank 1 disjointly. Between the adjacent first mantles 6' of the cold accumulators 4 there is at least one inner spacer insert 19, this time two, one at ¼ of the height of the tank 1, and the other at % of the height of the tank 1, and these are connected to the first mantles 6' disjointly. The inner spacer inserts 19 are openwork, while the outer spacer insert 18 located halfway up the tank 1 is solid. The tank 1 is provided with at least one vertical baffle 20, this time in two, attached by its bottom edge to the bottom 13 of the tank 1, and at most by its one lateral edge to the side wall 12 of the tank 1, both of these vertical baffles 20 being arranged in the tank 1 alternately, with an offset one with respect to the other by being attached to the opposite side walls 12. The tank 1 is in the form of a cuboid with a rectangular bottom, and the 6', 6" spatial Exemplary method of cooling the device for storage of energy, in particular cooling energy, in which device continuous thermal contact between the water 7 being transformed into the ice 7', i.e. for its liquid and solid states of aggregation, and the refrigerant 5 supplying the cold, via a thermal conductor is maintained, and the transformation of the water 7 from its liquid state to its solid state of aggregation and vice versa is carried out in a cyclic mode, wherein one from the water 7 to the ice 7' when accumulating cold, and one from the ice 7' to the water 7 when discharging the cold, is based on the fact that the ice 7' is formed during accumulation first in the immediate vicinity of the thermal conductor, in the vicinity of which the refrigerant 5 flows tangentially. The water 7 in both its liquid and solid states of aggregation, constituting the cold accumulator 4 bounded externally in each case by the first mantle 6' made made of a thermal conductor, is thermally contacted and held on the inside of each first mantle 6' which is previously filled with it. By cooling the cold accumulator 4, once the ice 7' has been formed in the immediate vicinity of the first mantle 6' in the form of a ring similar in size but with a smaller axial dimension relative to the first mantle 6', it is further cooled by producing the ice 7' axially towards the inside of the cold accumulator 4 while at the same time producing successive layers of the ice 7' with successively smaller axial ring dimensions in relation to the axial size of the first mantle 6' of the individual cold accumulator 4. The cold is supplied to the cold accumulators 4 by washing over their first mantles 6' from the outside with the liquid refrigerant 5 collected and flowing as a free stream through the tank 1. At least one cold accumulator 4 is cooled down in one tank 1, this time two, and the refrigerant 5 is maintained in a liquid state of aggregation and at a temperature above its freezing point, keeping the refrigerant 5 essentially at a constant temperature, but the temperature of the refrigerant 5 is simultaneously maintained as less than 0°C. The cold is additionally supplied to the cold accumulator 4 by washing over the interior of at least one second mantle 6" of the same cold accumulator 4 with the refrigerant 5 by passing the refrigerant 5 through this second mantle 6" located inside the cold accumulator 4, whereby said refrigerant 5 is supplied and said refrigerant 5 is discharged from the exterior of the cold accumulator 4 by means of the tubular inlet 33' and the tubular outlet 33" respectively, supplying the second mantle 6" from the freezing thermal circuit. The ice 7' is formed in the immediate vicinity of the second mantle 6", in the form of a ring similar in size but with a larger axial dimension relative to the second mantle 6", and it is subsequently cooled down by producing the ice 7' axially towards the outside of the cold accumulator 4 while producing successive layers of the ice 7' with successively larger axial ring dimensions relative to the axial size of the second mantle 6" of the individual cold accumulator 4 This is a simultaneous operation mode, during which the device is used in process accelerator mode: accelerated full solid mantles are cylinders with a circular bottom. The spatial solids of the first 6' mantles have a closed top base, and each is equipped with a filling valve 22 and a vent valve 23. The second 6" mantles are pass-through, i.e. they are open on both sides to the refrigerant circuit 5. The bottoms of the spatial solids of the first mantles 6', which are their lower base, are also a section of the bottom 13 of the tank 1. The spatial solids of the first mantles 6' and the second mantles 6" are placed vertically, coaxially, in the tank 1. The spatial solids of the first mantles 6', in their cross-section, have a longest diagonal no longer than 60cm, this time 40cm. The spatial solid of the second mantle 6" in its cross-section has the longest diagonal no longer than 10cm, but no longer than 25% of the length of the diagonal of the first mantle, this time it has precisely 10cm. The spatial solids of the first mantles 6', in their longitudinal cross-section, have a longest diagonal no longer than 300cm, this time 50cm. The spatial solid of the second mantle 6" in its longitudinal cross-section, usually has the longest diagonal no longer than 95% of the length of the longitudinal diagonal of the first mantle 6', preferably no shorter than 50%, this time it is 45cm. The wall thickness of the first mantle (6') and the second mantle (6") is no greater than 4mm, this time precisely 4mm. The first mantles 6' on the inner side are fitted with 24 rod tabs to increase the inner surface area of the first mantle 6'. In the first mantles 6', on their inner side, the cores 25 are mounted, spaced from the side wall 12, vertically, being non-absorbent, but highly flexible, which are compensators for the pressure force of the cold accumulator 4 in its phase transformation. In addition, in the first mantles 6', on their inner side, the inserts 26 are mounted, horizontally sliding, non-absorbable but strongly elastic, which are compensators for the evaporative force of the cold accumulator 4 in its phase transformation, and their number is multiplied to at least two, this time three, and starting from the second one they are distributed in the first mantle 6' at distances from the upper base and the lower base in proportion, the first one being fixed on the base of the lower spatial solid of the first mantle 6'. The tank 1 is a sealed pressure chamber with one sealing insert 27, which is also a spacer insert. The tank 1 is lined with thermally insulating material, and the refrigerant 5 is an aqueous glycol solution. The first mantle 6' is filled with the water 7 in an amount of no more than 90% of the volume of the space body of the first mantle 6', that is, at the same time, outside the second mantle 6", this time precisely 90%. The first mantle 6' is also filled internally with the micro-radicals 28 of the ice 7', freely displaced in the first mantle 6' and in the water 7 constituting its filling, the volume amount of the micro-radicals 28 of the ice 7' not exceeding 5% of the volume of the spatial solid of the first mantle 6', this time not exceeding 3%. In one tank 1, all of the cold accumulators 4 arranged therein in their own mantles 6',6", seated in the tank 1 by means of the internal spacer inserts 19 and the external spacer inserts 18, are arranged so that the inserts are elements which fix the position of the cold accumulators 4 with respect to the tank 1, and with respect to each other. accumulation or accelerated full discharge, respectively, this time accelerated cold accumulation in the form of the ice 7'. However, this is not the only mode in which the device can be used. An example of this will be the hybrid mode described below, occurring between consecutive simultaneous modes. For every 1m³ of volume of all cold accumulators 4 cooled in the tank 1, between 0.01m³ and 0.9m³ of the refrigerant 5 operating in the tank 1 outside the first mantles 6' of the cold accumulators 4, this time precisely 0.9m³, respectively, is used to cool them down.

This time, the temperature of the refrigerant 5 is kept at a constant lower than -1°C, and more precisely at -2°C. The refrigerant 5 is supplied to the tank 1 and to the interior of the second mantle 6" after cooling down, by means of pipes, whereby, after cooling down through the supply pipe 10', and after use, the supplied refrigerant 5 is discharged through the discharge pipe 10", where flow directions and temperature of the flowing refrigerant 5 depends on whether the device is currently operating in the accelerated accumulation mode, in the accelerated discharge mode or in the hybrid mode, which depends on the settings of the valves 29. The refrigerant 5 is supplied, as mentioned above this time during accelerated cold accumulation, to the tank 1 and to the inside of the second mantle 6" also during the cooling process, i.e. on an ongoing basis, with simultaneous stream exchange, and the cooling of the refrigerant 5 is carried out in an external, independent heat exchanger operating for the cooling process of the cold accumulators 4. The circulation of the liquid refrigerant 5 is forced by the circulation pump 2 and the impeller 14 equipped with the blades 15. The forcing of the liquid refrigerant 5 through the tank 1 and through the interior of the second mantle 6" is carried out with a laminar flow, while this occurs at a later stage of the process, and at an early stage of the process the forcing of the liquid refrigerant 5 through the tank 1 and through the interior of the second mantle 6" is carried out with a turbulent flow. The stream washing over the first mantles 6' of the cold accumulators 4 flows through the tank 1 in a serpentine and simultaneously spiral path, using the spaces between the vertical baffles 20 and the spaces between the horizontal baffles 21 and the spaces between the inner inserts 19 and the outer inserts 18 and the openwork spaces. An aqueous glycol solution is used as the refrigerant 5. The first mantle 6' from the inside and the second mantle 6" from the outside are filled with the water 7 to an amount of no more than 90% of the volume of the spatial solid of the first mantle 6', this time precisely 90%. The freezing up of the ice 7' during cold accumulation is carried out by means of micro-radicals 28 of the ice 7' freely moved in the first mantle 6' and in the water 7 filling thereof, using the volume amount of micro-radicals 28 of the ice 7' preferably not exceeding 5% of the volume of the first mantle 6', this time 3%. Up to 100 cold accumulators 4 are used in the single tank 1 limiting them spatially on the outside by their own first mantles 6', and on the inside by the second mantles 6", this time 2 each, their position relative to the tank 1 and to each other being determined by embedding the first coats 6' in the tank 1 through the internal spacer inserts 19 and the external spacer inserts 18, and the second mantles 6" axially in the first mantles 6'. Between 15,000kJ and 150,000,000kJ of cooling energy is accumulated in all cold accumulators 4 operating in the single tank 1, but this time only 21,600kJ.

The pressure in the tank 1 and in the cold accumulators 4 is maintained in the range from 1atm to 6atm, this time precisely corresponding to the atmospheric pressure.

An exemplary application of the device for storage of energy, in particular cooling energy, with cyclic freeze-up, i.e. the generation and build-up of the ice 7', wherein the device and/or the method shown above is used, this time in detail described by cyclic accelerated cold accumulation mode, is that between cycles of accelerated cold accumulation, a hybrid mode is used, i.e. during the cold accumulation, i.e. during the transformation of the water 7 to form the ice 7', the same device is used to discharge the cold, i.e. the water 7 is simultaneously obtained from the accumulated ice 7' during the reverse transformation. The cooled refrigerant 5 with a temperature of less than 0°C is used to supply the cold, and it is supplied to the outer environment of the first mantle 6', while the previously used and now heated refrigerant 5 with a temperature of more than 0°C is used to recover the cold, and it is supplied to the inner environment of the second mantle 6". The first mantle 6' is used to build up the ice 7' in the cold accumulator 4, and the second mantle 6" is used to melt the ice 7'. conducting the transformation in a cyclic, daily mode, periodic intervals of simultaneous operation are used, consisting in that the device is used in the standard process accelerator mode of accelerated full accumulation or accelerated full discharge, respectively. Between the successive simultaneous modes, therefore, a transitional, or hybrid, mode is used, given above as a specific application for the device described.

### Second example.

As in the first example with the following changes.

There are 500 cold accumulators 4 in the tank 1, each of which is bounded by the first mantle 6' from the outside and the second mantle 6" from the inside, both in the form of a spatial solid made of a thermal conductor. The distance between the first mantles 6' of the adjacent cold accumulators 4 ranges from 2mm to 150mm, this time 2mm. For every 1m³ of volume of all the cold accumulators 4 cooled in the tank 1, there is between 0.01m³ and 0.9m³ of the refrigerant 5, this time 0.3m³.

The circulating pump 2 is fixed outside the tank 1, and has a connection through the circulation duct 9, via the inlet pipe 10' and the outlet pipe 10", to the tank 1 via the inlet port 11' of the tank 1 and the outlet port 11" of the tank 1, located at opposite ends of the wall 12 of the tank 1, the same wall 12 of the tank 1, with the inlet at the bottom above the bottom 13 of the tank 1 and the outlet at the top of the tank 1 above the cold accumulators 4. The tank 1 is provided with a single horizontal baffle 21, uninterruptedly attached by its edges, for at least 75% of their full circumference, to the straight side walls 12 of the tank 1, whereby if there were two horizontal baffles 21, they would be placed in the tank 1 alternately, with an offset. The tank 1 is in the form of a prism with a regular polygon bottom, this time a regular hexagon, and the coaxial mantles 6', 6" in the shape of a spatial solid are in the form of a prism with a regular polygon bottom, also a hexagon. The spatial solids of the mantles 6', 6" are placed in the tank 1 relative to the bottom 13 of the tank 1 in an intermediate position, i.e. between the vertical and the horizontal position, the deviation from the vertical being no more than 25° of angular measure, this time 3° of angular measure to better force the spiral flow of the refrigerant 5 between the first mantles 6'. The spatial solids of the first mantles 6', in their cross-section, have a longest diagonal no longer than 60cm, this time 6cm. The spatial solids of the first mantles 6', in their longitudinal cross-section, have a longest diagonal no longer than 300cm, this time precisely 300cm. The spatial solid of the second mantle 6" in its cross-section has the longest diagonal no longer than 10cm, but no longer than 25% of the length of the diagonal of the first mantle, this time it has precisely 1cm. The spatial solid of the second mantle 6" in its longitudinal cross-section, usually has the longest diagonal no longer than 95% of the length of the longitudinal diagonal of the first mantle 6', preferably no shorter than 50%, this time it is 300cm. The first mantles 6' on the inner side are fitted with 24 tabs, this time flat ones. The refrigerant 5 in the tank 1 is aqueous brine. The volume amount of micro-radicals 28 of the ice 7' is 5%.

An example of how to cool the device for storage of energy such that 500 cold accumulators 4 are cooled in one tank 1, and for every 1m³ of volume of all cold accumulators 4 cooled in the tank 1, between 0.01m³ and 0.9m³ of the refrigerant 5 operating in the tank 1 outside the first mantles 6' of the cold accumulators 4, this time precisely 0.3m³, respectively, is used to cool them down.

This time, the temperature of the refrigerant 5 is maintained at a constant lower than -1°C, precisely at -6°C. The volume amount of the micro-radicals 28 of the ice 7' preferably not exceeding 5% of the volume of the first mantle 6' is used, this time precisely 5%. Between 15,000kJ and 15,000,000kJ of cooling energy is accumulated in all cold accumulators 4 operating in the single tank 1, but this time only 8,488,800kJ. The pressure in the tank 1 and in the cold accumulators 4 is maintained in the range from 1atm to 6atm, this time precisely corresponding to six times atmospheric pressure.

The exemplary application of the device for storage of energy, in particular cooling energy, with cyclic freeze-up, i.e. the generation and build-up of the ice 7', wherein the device and/or the method shown above is used, that during the cold accumulation, i.e. during the transformation of the water 7 into the ice 7', the same device is used for discharging the cold, i.e. the water 7 is simultaneously obtained from the accumulated ice 7' during the reverse transformation. The cooled refrigerant 5 with a temperature of less than 0°C is used to supply the cold, and it is supplied to the inner environment of the second mantle 6", while the previously used and now heated refrigerant 5 with a temperature of more than 0°C is used to recover the cold, and it is supplied to the outer environment of the first mantles 6'. In the hybrid mode used here, therefore, the second mantle 6" is used to build up ice in the cold accumulator 4, and the first mantle 6' is used to melt the ice. Conducting the transformation in a cyclic mode, periodic intervals of simultaneous operation are used, consisting in that the device is used in the standard process accelerator mode, of accelerated full accumulation or accelerated full discharge, respectively.

### Third example.

As in the first example with the following differences

The mantles 6', 6" are completely submerged in the liquid refrigerant 5, this time the refrigerant 5 washes over them to their full height and, in addition, the refrigerant fills not only the chamber proper 32 of the tank 1, but the entire tank 1 including the vestibules 30', 30", i.e. 100%. The tank 1 thus has at least one vestibule 30 by which the outer environment of the tank 1 is separated from its chamber proper 32 containing the refrigerant 5 and the cold accumulators 4 surrounded by the mantles 6', 6", the vestibule 30 being at least one manifold 30', 30". This time it has two vestibules 30, and with two or more vestibules 30, at least one is the supply manifold 30', and at least the other is the return manifold 30". The manifolds 30', 30" are separated from the chamber proper 32 of the tank 1 by the baffle 31, respectively the supply manifold 30' by the first baffle 31' and the return manifold 30" by the second baffle 31". For this reason, the mantles 6', 6" of the multiplied cold accumulators 4 are at a distance connected to the tank 1 and to each other, of which at a distance with respect to the walls 12 of the tank 1 and with respect to the adjacent mantles 6', as well as with respect to the bottom 13 of the tank 1, because they are separated by manifolds 30',30", the supply manifold 30' and the return manifold 30", which are the vestibules 30 of the tank proper 32 in which the outer mantles 6' are embedded, while the inner mantles 6" penetrate into the vestibules 30 through the baffles 31 , respectively through the first baffle 31' into the supply manifold 30' and through the second baffle 31" into the return manifold 30". The circulation pump 2 is mounted outside the tank 1, and has a connection via the circulation duct 9 with the inlet pipes 10' and the outlet pipes 10", to the tank 1 and/or with the tubular inlet 33' and the tubular outlet 33" via the inlet port 11' and the outlet port 11" of the tank 1. The inlet ports 11' and the outlet ports 11" are positioned on the opposite walls 12 of the tank 1, with the inlet at the bottom of the tank 1 and the outlet at the top of the tank 1, but such that the tubular inlet 33' and the tubular outlet 33" are positioned on the opposite walls 12 of the tank 1 and in other baffles 31', 31" of the manifolds 30', 30". The method and application of the device for storage of energy, this time, is performed so that cyclic freeze-up, i.e. the generation and build-up of the ice 7' occurs, as well as cyclic discharge, i.e. the melting of the ice 7' to form the water 7, separated by the application of the standard process accelerator mode, respectively accelerated full accumulation and accelerated full discharge interchangeably in sequence again and again consisting of simultaneous cooling of the first mantle 6' and the second mantle 6" with the refrigerant 5 and simultaneous heating of the first mantle 6' and the second mantle 6" with the heated refrigerant 5. The hybrid freeze-up sequence, i.e. together with the melting of the ice 7' once involves the refrigerant 5 below 0°C flowing outside the first mantle 6' and at the same time above 0°C inside the second mantle 6", and the next time the refrigerant 5 below 0°C flows inside the second mantle 6" and at the same time below 0°C outside the first mantle 6'. Transient, or hybrid, modes are therefore used between the successive simultaneous modes, given above as specific applications for the device described, and the refrigerant circulation in terms of direction and as a rule of flow depends on the settings of the valves 29.

## Claims

1. A device for storage of energy, in particular cooling energy, equipped with a tank, preferably a circulating pump and a heat exchanger, said heat exchanger comprises at least one cold accumulator located in the tank, supplied in terms of refrigeration with a cold liquid refrigerant which is a carrier of the cold, wherein the refrigerant is an aqueous glycol solution or brine or alcohol or a solution thereof, wherein the tank comprises at least one cold accumulator, each bounded by a mantle in the form of a spatial solid made of a thermal conductor, which spatial solid is filled with water and an air or vacuum buffer supplementary up to 100% of said filling, wherein the mantled of multiplied cold accumulators are preferably inseparably and at a distance connected to the tank and to each other, and the distance between the mantles of adjacent cold accumulators preferably ranges from 2mm to 150mm, wherein the tank is filled with the liquid refrigerant as a cold carrier, which refrigerant surrounds all the mantles of the cold accumulators in the tank, and at the same time the liquid refrigerant constitutes a freezing thermal circuit of the cold accumulators bounded by their mantles, **characterised in that** the mantle (6) surrounding the cold accumulator (4) is the first mantle (6') of this cold accumulator (4), while inside the first mantle (6'), at a distance therefrom, but preferably using a connection of at least one thermal bridge (34), there is at least one second mantle (6") of the same cold accumulator (4), the outer environment of the second mantle (6") being the cold accumulator (4), and the inner environment in the kind of filling of the second mantle (6") is the refrigerant (5) supplied and discharged by the second mantle (6") from the outside of the cold accumulator (4), wherein the second mantle (6") has a tubular input (33') and has a tubular output (33") connecting the second mantle (6") to the freezing thermal circuit.

2. The device for storage of energy according to claim 1, **characterised in that** the tank (1) has at least one vestibule (30) by which the external environment of the tank (1) is separated from its chamber proper (32) containing the refrigerant (5), the vestibule (30) this time being at least one manifold (30', 30"), while with two and more vestibules (30), at least one of them is a supply manifold (30') and at least the other of them is a return manifold (30"), preferably the manifold (30',30") is separated from the chamber proper (32) of the tank (1) by the baffle (31), respectively the supply manifold (30') by the first baffle (31'), and the return manifold (30") by the second baffle (31")

3. The device according to claim 1 or 2, **characterised in that** the circulating pump (2) has a connection through the circulation duct (9), with the inlet pipes (10') and the outlet pipes (10"), to the tank (1) and/or with the pipe inlet (33') and the pipe outlet (33") through the inlet ports (11') and the outlet ports (11") of the tank (1), whereby the inlet ports (11') and the outlet ports (11") are positioned at opposite ends of the wall (12) of the tank (1), the same wall (12) of the tank (1), or at opposite walls (12) of the tank (1), with the inlet preferably at the bottom (13) of the tank (1) and the outlet preferably at the top of the tank (1).

4. The device according to claim 1 or 2, **characterised in that** at least between the first mantle (6') and the tank (1) there is at least one outer spacer insert (18) preferably connected to them disjointly, while at least between the adjacent first mantles (6') of the cold accumulators (4) there is at least one inner spacer insert (19), preferably connected to them disjointly, wherein the inner spacer insert (19) and/or the outer spacer insert (18) is openwork, the inner spacer insert (19) and/or the outer spacer insert (18) being arranged with respect to the tank (1) and/or with respect to the first mantle (6') spirally or in a labyrinth arrangement.

5. The device according to claim 1 or 2 or 3 or 4, **characterised in that** the tank (1) is fitted with at least one vertical baffle (20) fixed by its lower edge to the bottom (13) of the tank (1) and by at most its one lateral edge to the wall (12) of the tank (1), the vertical baffles (20) preferably being arranged alternately, preferably with an offset, within the tank (1), or the tank (1) has at least one horizontal baffle (21) uninterruptedly attached by its edges, preferably for at least 75% of their full circumference to the rounded wall (12) or the straight side walls (12) of the tank (1), the horizontal baffles (21) being preferably arranged alternately in the tank (1), preferably with an offset.

6. The device according to claim 1 or 2 or 3 or 4 or 5, **characterised in that** the second mantle (6") is inserted into the first mantle (6') in an appropriate position, wherein the mantles (6',6") are arranged preferably coaxially to each other, wherein the spatial solid of the second mantle (6") in its cross-section has a longest diagonal of not more than 10cm, but preferably not less than 1cm, but not longer than 25% of the diagonal length of the first mantle (6'), and the spatial solid of the second mantle (6") in its longitudinal cross=section has a longest diagonal not longer than 95% of the longitudinal diagonal length of the first mantle (6'), but preferably not shorter than 50%, and the wall thickness of the first mantle (6') and the second mantle (6") is not greater than 4mm.

7. A method of cooling the device for storage of energy according to any of the claims 1-6 in particular cooling energy, in which continuous thermal contact is maintained between the water being transformed into ice, that is, for the liquid and solid states of aggregation thereof, and the refrigerant supplying the cold, via a thermal conductor, and the transformation of the water from the liquid to the solid state and vice versa is carried out in a cyclic mode, wherein from water into ice when accumulating the cold, and from ice into water when discharging the cold, the ice being formed during accumulation first in the immediate vicinity of the thermal conductor, in the vicinity of which the refrigerant flows tangentially, where water in both its aggregate states, liquid and solid, which is the cold accumulator bounded externally by the first mantle of the thermal conductor, is thermally contacted and maintained on the inside of each first mantle, which is previously filled with it, while cooling the cold accumulator, after ice has formed in the immediate vicinity of the first mantle, in the form of a ring similar in size but of smaller axial dimension with respect to the first mantle, it is further cooled down by producing ice axially towards the inside of the cold accumulator while producing successive layers of ice of successively smaller axial dimension of the rings with respect to the axial size of the first mantle of each cold accumulator, and the cold is supplied to the cold accumulators by washing over their first mantles from the outside with the liquid refrigerant accumulated and flowing as a free stream through the tank, preferably with forcing the circulation of this stream, whereby at least one cold accumulator is cooled down in one tank, and the refrigerant is maintained in a liquid state of aggregation and at a temperature above its freezing point, preferably the refrigerant is maintained at an essentially constant temperature, but the temperature of the refrigerant is simultaneously maintained as less than 0°C, **characterised in that** the cold is additionally supplied to the cold accumulator (4) by washing over the interior of at least one second mantle (6") of the same cold accumulator (4) with the refrigerant (5) by passing the refrigerant (5) through this second mantle (6") located inside the cold accumulator (4), whereby said refrigerant (5) is supplied and said refrigerant (5) is discharged from the exterior of the cold accumulator (4) by means of a tubular inlet (33') and a tubular outlet (33") respectively, supplying the second mantle (6") from the freezing thermal circuit.

8. The method according to claim 7, **characterised in that** the ice (7') is formed in the immediate vicinity of the second mantle (6"), in the form of a ring similar in size but with a larger axial dimension relative to the second mantle (6"), and is further cooled down by forming the ice (7') axially towards the outside of the cold accumulator (4) while at the same time producing successive layers of the ice (7') with successively larger axial dimension rings relative to the axial size of the second mantle (6") of the respective cold accumulator (4).

9. The method according to claim 7 or 8, **characterised in that** the forcing of the liquid refrigerant (5) through the tank (1) and/or through the interior of the second mantle (6") is carried out with a laminar flow, preferably at a late stage of the process, while the forcing of the liquid refrigerant (5) through the tank (1) and/or through the interior of the second mantle (6") is carried out with a turbulent flow, preferably at an early stage of the process, of which an aqueous glycol solution or brine or alcohol or a solution thereof is used as the refrigerant (5), whereby the temperature of the refrigerant (5) is maintained at less than -1°C, preferably less than -6°C.

10. The method according to claim 7 or 8 or 9, **characterised in that** the flow washing over the first mantles (6') of the cold accumulators (4) flows through the tank (1) along a serpentine, spiral or labyrinth path, using the spaces between the vertical baffles (20) and/or the spaces between the horizontal baffles (21) and/or the spaces between the inner liners (19) and/or the outer liners (18) and/or the openwork spaces.

11. The method according to claim 7 or 8 or 9 or 10, **characterised in that** the freezing up of the ice (7') during cold accumulation is carried out by means of ice micro-radicals (28) of the ice (7'), preferably freely moved and/or stationary in the first mantle (6') and/or in the water (7) filling thereof, using a volume amount of the micro-radicals (28) of the ice (7') preferably not exceeding 5% of the volume of the first mantle (6').

12. Use of the device for storage of energy according to any of the claims 1-6, in particular cooling energy, during cyclic freeze-up, i.e. the generation and build-up of ice, **characterised in that** during accumulation of the cold, i.e. during the transformation of the water (7) into the ice (7'), the same device for discharge of the cold is used, i.e. the water (7) is obtained simultaneously from the accumulated ice (7') during the reverse transformation.

13. Use of the device according to claim 12, **characterised in that** the cooled refrigerant (5) with a temperature lower than 0°C is used for cold supply, whereby it is supplied to the outer environment of the first mantle (6'), while a previously used and now heated refrigerant (5) with a temperature higher than 0°C is used for cold recovery, whereby it is supplied to the inner environment of at least one of the second mantles (6"), whereby it is supplied to the inner environment of at least one second mantle (6"), preferably the first mantle (6') being used for build-up of the ice (7') in the cold accumulator (4), and one of the second mantles (6") being used for melting the ice (7').

14. Use of the device according to claim 12, **characterised in that** the cooled refrigerant (5) with a temperature lower than 0°C is used for cold supply, whereby it is supplied to the inner environment of at least one second mantle (6'), while a previously used and now heated refrigerant (5) with a temperature higher than 0°C is used for cold recovery, whereby it is supplied to the outer environment of the first mantle (6'), preferably at least one second mantle (6") being used for build-up of the ice (7') in the cold accumulator (4), and the first mantle (6') being used for melting the ice (7').

15. Use of the device according to claim 12 or 13 or 14, **characterised in that** conducting the transformation in a cyclic mode, preferably daily, periodic intervals of simultaneous operation are used, during which the device is used in either standard process accelerator mode of accelerated full accumulation or accelerated full discharge, respectively, and during these periodic intervals a hybrid mode is used.

## Patentansprüche

1. Eine Vorrichtung zur Energiespeicherung, insbesondere zur Speicherung von Kälteenergie, ausgestattet mit einem Behälter, vorzugsweise einer Umwälzpumpe und einem Wärmetauscher, wobei das Element des Wärmetauschers mindestens ein im Behälter angeordneter Kältespeicher ist, der mit einem flüssigen Kältemittel zur Kälteversorgung betrieben wird, wobei das Kältemittel eine wässrige Glykol-Lösung, Sole oder Alkohol oder dessen Lösung ist. Im Behälter ist mindestens ein Kältespeicher angeordnet, wobei jeder Kältespeicher von einem Mantel in Form eines Raumkörpers aus einem Wärmeleiter umgeben ist. Dieser Raumkörper ist mit Wasser und einem Luft- oder Vakuumpuffer, der bis zu 100% des Volumens ergänzt, gefüllt. Die Mäntel der mehrfachen Kältespeicher sind vorzugsweise untrennbar und mit Abstand zum Behälter und/oder untereinander verbunden, wobei der Abstand zwischen den Mänteln benachbarter Kältespeicher vorzugsweise zwischen 2 mm und 150 mm beträgt. Der Behälter ist mit flüssigem Kältemittel als Kälteträger gefüllt, das die Umgebung aller im Behälter befindlichen Kältespeichermäntel bildet und gleichzeitig den gefrierenden thermischen Kreislauf der durch ihre Mäntel begrenzten Kältespeicher darstellt. **Dadurch gekennzeichnet, dass** der Mantel (6), der den Kältespeicher (4) umgibt, der erste Mantel (6') dieses Kältespeichers (4) ist, und im Inneren des ersten Mantels (6'), in einem Abstand davon, jedoch vorzugsweise unter Verwendung einer Verbindung durch mindestens eine thermische Brücke (34), sich mindestens ein zweiter Mantel (6") desselben Kältespeichers (4) befindet. Die äußere Umgebung des zweiten Mantels (6") bildet der Kältespeicher (4), und die innere Umgebung des zweiten Mantels (6") ist mit Kältemittel (5) gefüllt, das durch den zweiten Mantel (6") von außen in den Kältespeicher (4) hinein- und herausgeleitet wird. Der zweite Mantel (6") hat einen Rohreinlass (33') und einen Rohrauslass (33"), die den zweiten Mantel (6") mit dem gefrierenden thermischen Kreislauf verbinden.

2. Vorrichtung zur Energiespeicherung nach Anspruch 1, **dadurch gekennzeichnet, dass** der Behälter (1) mindestens eine Vorratskammer (30) aufweist, durch die der äußere Bereich des Behälters (1) von seinem Hauptfach (32) getrennt ist, welches das Kältemittel (5) enthält, wobei diese Vorratskammer (30) mindestens ein Kollektor (30', 30") ist, bei zwei oder mehr Vorratskammern (30) ist mindestens eine von ihnen ein Versorgungs-Kollektor (30') und mindestens eine andere von ihnen ein Rücklauf-Kollektor (30"), wobei der Kollektor (30', 30") vorteilhafterweise durch eine Trennwand (31) vom Hauptfach (32) des Behälters (1) getrennt ist, entsprechend der Versorgungs-Kollektor (30') durch eine erste Trennwand (31') und der Rücklauf-Kollektor (30") durch eine zweite Trennwand (31").

3. Vorrichtung nach Anspruch 1 oder 2, **dadurch gekennzeichnet, dass** die Umwälzpumpe (2) über einen Umlaufkanal (9) mit den Zuleitungen (10') und den Ableitungen (10") mit dem Behälter (1) und/oder dem Rohrleitungs-Eingang (33') und dem Rohrleitungs-Ausgang (33") durch Einlassstutzen (11') und Auslassstutzen (11") des Behälters (1) verbunden ist, wobei die Einlassstutzen (11') und die Auslassstutzen (11") an den gegenüberliegenden Enden derselben Wand (12) des Behälters (1) oder an gegenüberliegenden Wänden (12) des Behälters (1) angebracht sind, wobei der Einlass vorzugsweise am Boden (13) des Behälters (1) und der Auslass vorzugsweise im oberen Teil des Behälters (1) angeordnet ist.

4. Vorrichtung nach Anspruch 1 oder 2, **dadurch gekennzeichnet, dass** sich zwischen dem ersten Mantel (6') und dem Behälter (1) mindestens ein äußerer Distanzhalter (18) befindet, der vorteilhafterweise abnehmbar mit ihnen verbunden ist, und dass sich zwischen benachbarten ersten Mänteln (6') der Kältespeicher (4) mindestens ein innerer Distanzhalter (19) befindet, der vorteilhafterweise abnehmbar mit ihnen verbunden ist, wobei der innere Distanzhalter (19) und/oder der äußere Distanzhalter (18) durchbrochen ist, wobei der innere Distanzhalter (19) und/oder der äußere Distanzhalter (18) relativ zum Behälter (1) und/oder relativ zum ersten Mantel (6') spiralförmig oder in einem Labyrinthmuster angeordnet ist.

5. Vorrichtung nach Anspruch 1 oder 2 oder 3 oder 4, **dadurch gekennzeichnet, dass** der Behälter (1) mindestens eine vertikale Trennwand (20) aufweist, die mit ihrer unteren Kante am Boden (13) des Behälters (1) und höchstens mit einer ihrer seitlichen Kanten an der Seitenwand (12) des Behälters (1) befestigt ist, wobei die vertikalen Trennwände (20) vorteilhafterweise im Behälter (1) abwechselnd, vorzugsweise versetzt, angeordnet sind, oder der Behälter (1) mindestens eine horizontale Trennwand (21) aufweist, die ununterbrochen mit ihren Kanten, vorzugsweise auf mindestens 75% ihres gesamten Umfangs, an der runden Wand (12) oder den geraden Seitenwänden (12) des Behälters (1) befestigt ist, wobei die horizontalen Trennwände (21) vorteilhafterweise im Behälter (1) abwechselnd, vorzugsweise versetzt, angeordnet sind.

6. Vorrichtung nach Anspruch 1 oder 2 oder 3 oder 4 oder 5, **dadurch gekennzeichnet, dass** der zweite Mantel (6") in dem ersten Mantel (6') in einer geeigneten Position angeordnet ist, wobei die Mäntel (6', 6") vorteilhafterweise koaxial zueinander angeordnet sind, wobei der räumliche Körper des zweiten Mantels (6") in seinem Querschnitt die längste Diagonale von nicht mehr als 10 cm aufweist, aber vorteilhafterweise nicht kürzer als 1 cm, jedoch nicht länger als 25% der Länge der Diagonale des ersten Mantels (6'), und der räumliche Körper des zweiten Mantels (6") in seinem Längsschnitt die längste Diagonale von nicht mehr als 95% der Länge der Längsdiagonale des ersten Mantels (6') aufweist, aber vorteilhafterweise nicht kürzer als 50%, wobei die Wandstärke des ersten Mantels (6') und des zweiten Mantels (6") nicht größer als 4 mm ist.

7. Verfahren zur Kühlung einer Energiespeichervorrichtung nach einem der Ansprüche 1-6, insbesondere zur Speicherung von Kälteenergie, bei dem ein kontinuierlicher Wärmekontakt des zu Eis gefrierenden Wassers, also in seinem flüssigen und festen Aggregatzustand, mit dem Kältemittel, das die Kälte liefert, durch einen Wärmeleiter aufrechterhalten wird, und der Übergang des Wassers vom flüssigen in den festen Zustand und umgekehrt zyklisch erfolgt, wobei das Wasser zu Eis wird, wenn Kälte gespeichert wird, und das Eis zu Wasser wird, wenn Kälte entladen wird. Das Eis bildet sich zunächst im nächstgelegenen Bereich des Wärmeleiters, in dessen Nähe das Kältemittel tangential strömt. Das Wasser, sowohl in flüssigem als auch in festem Zustand, das als Kältespeicher dient und jeweils außen durch einen ersten Mantel aus Wärmeleiter begrenzt wird, wird dabei thermisch kontaktiert und auf der Innenseite jedes ersten Mantels gehalten, der zuvor mit Wasser gefüllt wird. Beim Kühlen des Kältespeichers wird nach der Eisbildung im nächstgelegenen Bereich des ersten Mantels in Form eines ringförmigen Gebildes, das jedoch eine kleinere axiale Abmessung im Vergleich zum ersten Mantel hat, das Eis axial in Richtung des Inneren des Kältespeichers weiter gekühlt, wobei weitere Eisschichten gebildet werden, die jeweils eine kleinere axiale Abmessung im Vergleich zur axialen Größe des ersten Mantels des einzelnen Kältespeichers aufweisen. Die Kälte wird den Kältespeichern durch das Umspülen ihrer ersten Mäntel von außen mit flüssigem Kältemittel, das frei durch den Behälter fließt, vorzugsweise unter erzwungener Zirkulation dieses Stroms, zugeführt. In einem Behälter wird dabei mindestens ein Kältespeicher gekühlt, und das Kältemittel bleibt im flüssigen Aggregatzustand und bei einer Temperatur oberhalb seines Gefrierpunktes, vorzugsweise wird das Kältemittel im Wesentlichen bei konstanter Temperatur gehalten, wobei die Temperatur des Kältemittels jedoch gleichzeitig unter 0°C bleibt. **Dadurch gekennzeichnet, dass** die Kälte zusätzlich in den Kältespeicher (4) durch das Umspülen des Inneren von mindestens einem zweiten Mantel (6") desselben Kältespeichers (4) mit Kältemittel (5) eingeführt wird, indem das Kältemittel (5) durch diesen zweiten Mantel (6"), der sich im Inneren des Kältespeichers (4) befindet, geleitet wird, wobei das Kältemittel (5) von außen in den Kältespeicher (4) über einen Rohrleitungseinlass (33') und einen Rohrleitungsauslass (33") zugeführt und abgeleitet wird, wobei der zweite Mantel (6") aus dem Kälteumlauf gespeist wird.

8. Verfahren nach Anspruch 7, **dadurch gekennzeichnet, dass** die Eisbildung (7') in der unmittelbaren Umgebung des zweiten Mantels (6") in Form eines ringförmigen Gebildes erfolgt, dessen Größe der des zweiten Mantels (6") ähnlich ist, jedoch eine größere axiale Ausdehnung aufweist. Anschließend wird der Eisring (7') axial in Richtung der Außenseite des Kältespeichers (4) weiter gekühlt, wobei weitere Eisschichten (7') gebildet werden, die jeweils eine größere axiale Ausdehnung im Vergleich zur axialen Größe des zweiten Mantels (6") des einzelnen Kältespeichers (4) aufweisen.

9. Verfahren nach Anspruch 7 oder 8, **dadurch gekennzeichnet, dass** die Zirkulation des flüssigen Kältemittels (5) durch den Behälter (1) und/oder durch das Innere des zweiten Mantels (6") durch einen laminaren Strahl, vorzugsweise in der späten Phase des Prozesses, erzwungen wird, während die Zirkulation des flüssigen Kältemittels (5) durch den Behälter (1) und/oder durch das Innere des zweiten Mantels (6") durch einen turbulenten Strahl, vorzugsweise in der frühen Phase des Prozesses, erzwungen wird. Als Kältemittel (5) wird eine wässrige Glykol-Lösung oder Sole oder Alkohol oder dessen Lösung verwendet, wobei die Temperatur des Kältemittels (5) unter -1°C, vorzugsweise unter -6°C, gehalten wird.

10. Verfahren nach Anspruch 7 oder 8 oder 9, **dadurch gekennzeichnet, dass** der Strahl, der die ersten Mäntel (6') der Kältespeicher (4) umspült, in einem gewundenen, spiralförmigen oder labyrinthartigen Weg durch den Behälter (1) fließt, wobei die Räume zwischen den vertikalen Trennwänden (20) und/oder die Räume zwischen den horizontalen Trennwänden (21) und/oder die Räume zwischen den inneren Distanzhaltern (19) und/oder die Räume zwischen den äußeren Distanzhaltern (18) und/oder die durchbrochenen Räume genutzt werden

11. Verfahren nach Anspruch 7 oder 8 oder 9 oder 10, **dadurch gekennzeichnet, dass** das Einfrieren von Eis (7') während der Kältespeicherung mit Mikro-Keimen (28) von Eis (7'), vorzugsweise frei beweglich oder stationär im ersten Mantel (6') und/oder im Wasser (7), das seine Füllung darstellt, durchgeführt wird, wobei eine volumetrische Menge von Mikrokeimen (28) von Eis (7'), vorzugsweise nicht mehr als 5% des Volumens des räumlichen Körpers des ersten Mantels (6'), verwendet wird.

12. Verwendung einer Energiespeichervorrichtung nach einem der Ansprüche 1 bis 6, insbesondere zur Kälteenergiespeicherung bei zyklischem Einfrieren, d.h. Erzeugen und Wachsen von Eis, wobei eine Vorrichtung nach einem der Ansprüche 1 bis 39 verwendet wird, **dadurch gekennzeichnet, dass** während der Kältespeicherung, d.h. während der Umwandlung von Wasser (7) in Eis (7'), dieselbe Vorrichtung zur Kälteentladung verwendet wird, d.h. Wasser (7) gleichzeitig aus dem gespeicherten Eis (7') während der umgekehrten Umwandlung gewonnen wird.

13. Verwendung der Vorrichtung nach Anspruch 12, **dadurch gekennzeichnet, dass** zur Kälteversorgung ein gekühltes Kältemittel (5) mit einer Temperatur unter 0°C verwendet wird, welches in die äußere Umgebung des ersten Mantels (6') geleitet wird, während zur Kälterückgewinnung ein bereits zuvor verwendetes und nun erwärmtes Kältemittel (5) mit einer Temperatur über 0°C verwendet wird, welches in die innere Umgebung von mindestens einem zweiten Mantel (6") geleitet wird, wobei der erste Mantel (6') vorteilhaft zur Eisbildung (7') im Kältespeicher (4) und mindestens ein zweiter Mantel (6") zum Schmelzen des Eises (7') verwendet wird.**

14. Verwendung der Vorrichtung nach Anspruch 12, **dadurch gekennzeichnet, dass** zur Kälteversorgung ein gekühltes Kältemittel (5) mit einer Temperatur unter 0°C verwendet wird, wobei es in das innere Umfeld von mindestens einem zweiten Mantel (6") geleitet wird. Zur Rückgewinnung der Kälte wird ein bereits zuvor genutztes, nun jedoch erwärmtes Kältemittel (5) mit einer Temperatur über 0°C verwendet, wobei es in das äußere Umfeld des ersten Mantels (6") geleitet wird. Dabei wird vorzugsweise zur Eisbildung (7") im Kältespeicher (4) mindestens der zweite Mantel (6") verwendet.

15. Verwendung der Vorrichtung nach Anspruch 12 oder 13 oder 14, **dadurch gekennzeichnet, dass** zyklische Umwandlungen, vorzugsweise im Tagesrhythmus, mit periodischen Unterbrechungen im gleichzeitigen Betrieb durchgeführt werden, während derer die Vorrichtung im Modus eines Prozessbeschleunigers für standardmäßig beschleunigte vollständige Speicherung oder beschleunigte vollständige Entladung verwendet wird, und während dieser periodischen Unterbrechungen wird der Hybridmodus verwendet.

## Revendications

1. Dispositif d'accumulation d'énergie, en particulier de l'énergie de refroidissement, comportant un réservoir, de préférence une pompe de circulation, et un échangeur de chaleur, ledit échangeur comportant au moins un accumulateur de froid situé dans le réservoir, alimenté par refroidissement à l'aide d'un agent de refroidissement véhiculant le froid, l'agent de refroidissement étant une solution aqueuse de glycol ou de saumure ou d'alcool ou leur solution, dans lequel au moins un accumulateur de froid est situé dans le réservoir, dans lequel chaque accumulateur de froid est limité par une enveloppe sous la forme d'un volume de conducteur thermique, qui est un volume spatial rempli d'eau et d'air ou d'un tampon à vide, complémentaire à 100 % de ce remplissage, où les enveloppes des accumulateurs de froid multiples sont reliées de manière inséparable et à distance au réservoir et/ou les unes aux autres, et où la distance entre les enveloppes des accumulateurs de froid adjacents est de préférence comprise entre 2 mm et 150 mm, Où le réservoir est rempli de l'agent de refroidissement liquide comme transporteur de froid, qui est l'agent de refroidissement qui entoure toutes les enveloppes de batterie dans le réservoir des batteries froides, et en même temps l'agent de refroidissement liquide est la circulation thermique de congélation des batteries froides délimitée par leurs enveloppes, ce qui est caractéristique du fait que le froid est le support de stockage de froid que l'enveloppe (6) entourant l'accumulateur de froid (4) est la première enveloppe (6') de l'accumulateur de froid (4), et qu'au moins une enveloppe (6') de l'accumulateur de froid (34) se trouve à l'intérieur de l'accumulateur de froid (6'), mais de préférence avec au moins un pont thermique (6), et au moins une enveloppe (6') de le même accumulateur de froid (4), lorsque l'enveloppe extérieure de la seconde enveloppe (6") est un accumulateur de froid (4) et l'enveloppe intérieure de la seconde enveloppe (6") est un agent de refroidissement (5) introduit et déchargé par la seconde enveloppe (6") depuis l'extérieur de l'accumulateur de froid (4), la seconde chemise (6") présente une entrée tubulaire (33") et une sortie tubulaire (33") reliant la seconde chemise (6") au circuit thermique de congélation.

2. Dispositif d'accumulation d'énergie selon la revendication 1, **caractérisé en ce que** le réservoir (1) comporte au moins une antichambre (30) destinée à séparer l'environnement extérieur du réservoir (1) de sa chambre (32) comprenant de l'agent de refroidissement (5), dans lequel l'antichambre (30) est au moins un collecteur (30', 30'), en cas des au moins deux antichambres (30), l'au moins un étant le collecteur d'alimentation (30'), l'au moins le second étant le collecteur de retour (30"), de préférence le collecteur (30 31', 30") est séparé de la chambre (30) du réservoir (1) à l'aide de la chicane (31), respectivement le collecteur d'alimentation (32') à l'aide d'une première chicane et le collecteur de retour (30') à l'aide d'une seconde chicane (31').

3. Dispositif selon la revendication 1 ou 2, **caractérisé en ce que** la pompe de circulation (2) est reliée par une conduite de circulation (9) à des tuyaux d'alimentation (10') et à des tuyaux d'évacuation (10'), au réservoir (1) et/ou à un tube d'entrée (33') et à un tube de sortie (33') à l'aide des orifices d'entrée (11') et des orifices de sortie (11') du réservoir (1), les orifices d'entrée (11') et les orifices de sortie (11') étant situés sur des extrémités opposées de la paroi (12) du réservoir (1), de la même paroi (12) du réservoir (1), ou sur des parois (12) opposées du réservoir (1), une entrée étant de préférence dans la face inférieure (13) du réservoir (1) et une sortie étant de préférence dans la face supérieure du réservoir (1).

4. Dispositif selon la revendication 1 ou 2, **caractérisé en ce que**, entre la première enveloppe (6') et le réservoir (1), est disposé au moins une entretoise (18) extérieure, de préférence reliée de manière amovible, et, au moins entre les premières enveloppes (6') adjacentes des accumulateurs de froid (4), est disposé au moins une entretoise (19) intérieure, de préférence reliée de manière amovible avec les premières enveloppes, l'entretoise (19) intérieure et/ou l'entretoise (18) extérieure étant ajourées, dans lequel l'entretoise (19) intérieure et/ou l'entretoise (18) extérieure sont disposés en spirale ou en labyrinthe par rapport au réservoir (1) et/ou à la première enveloppe (6').

5. Dispositif selon la revendication 1 ou 2 ou 3 ou 4, **caractérisé en ce que** le réservoir (1) comporte au moins une cloison (20) verticale fixée par son bord inférieur à la face inférieure (13) du réservoir (1) et au plus par son bord latéral à la paroi (12) latérale du réservoir (1), dans lequel des cloisons (20) verticales se situent, de préférence dans le réservoir (1) en alternance, de préférence de manière évasive, ou le réservoir (1) comporte au moins une cloison (21) horizontale fixée de manière continue à ses bords, de préférence au moins 75 % de sa circonférence, à une paroi (12) oblongue ou aux parois (12) droites, latérales, du réservoir (1), dans lequel les cloisons (21) horizontales sont de préférence situées en alternance dans le réservoir (1), de préférence de manière évasive.

6. Dispositif selon la revendication 1 ou 2 ou 3 ou 4 ou 5, **caractérisé en ce que** la seconde enveloppe (6") est placée dans la première enveloppe (6") dans une position adéquate, les enveloppes (6", 6") étant de préférence alignées les unes avec les autres, le corps spatial de la seconde enveloppe (6") étant situé dans sa section transversale, la diagonale la plus longue n'est pas supérieure à 10 cm, mais de préférence pas moins de 1 cm, mais n'est pas supérieure 25 % de la diagonale de la première enveloppe (6'), et la forme spatiale de la seconde enveloppe (6') dans sa section longitudinale présente la diagonale la plus longue ne dépassant pas 95 % de la longueur longitudinale de la première enveloppe (6'), mais de préférence pas inférieure à 50 %, tandis que l'épaisseur de paroi de la première enveloppe (6') et de la seconde enveloppe (6') n'est pas supérieure à 4 mm.

7. Procédé de refroidissement du dispositif d'accumulation d'énergie, selon l'une quelconque des revendications 1-6, en particulier l'énergie de refroidissement, dans laquelle l'eau transformée en glace, c'est-à-dire liquide et solide, est en contact continu avec l'agent de refroidissement alimentant le froid, par l'intermédiaire d'un conducteur thermique, et la transformation de l'eau de liquide en solide et vice versa est effectuée en mode cyclique, dont de l'eau à la glace lors de l'accumulation du froid et de la glace à l'eau lors de l'évacuation du froid, la glace étant produite lors de l'accumulation d'abord à proximité immédiate du conducteur thermique, près duquel l'agent de refroidissement s'écoule tangentiellement, où l'eau à l'état liquide et à l'état solide, étant un accumulateur de froid délimitée extérieurement à chaque fois par la gaine du premier conducteur thermique, elle entre en contact thermiquement et tient sur la face interne de chaque gaine du premier, qui est préalablement remplie de celle-ci, tout en refroidissant l'accumulateur de froid, après formation de glace à proximité immédiate de la première gaine, sous la forme d'un anneau de taille similaire, cependant, avec une dimension axiale plus faible par rapport à la première enveloppe, on refroidit encore plus ce dernier en produisant de la glace axialement vers l'intérieur de l'accumulateur de froid tout en produisant des enveloppes successives de glace de dimension axiale de moins en moins importante des anneaux par rapport à la dimension axiale du premier accumulateur de froid individuel, considérant que le froid est fourni aux batteries froides en lavant d'abord leur enveloppe de l'extérieur avec de l'agent de refroidissement liquide recueilli et s'écoulant librement à travers la collecte de l'huile, de préférence en forçant la circulation de ce flux, au moins un accumulateur de froid étant refroidi dans un réservoir, et l'agent de refroidissement est maintenu à l'état liquide et à une température supérieure à son point de congélation, de préférence l'agent de refroidissement est maintenu à une température constante, mais en même temps la température de l'agent de refroidissement est maintenue à moins de 0 °C, ce qui est caractéristique de ceci, que l'accumulateur de froid (4) est en outre alimentée par lavage avec de l'agent de refroidissement (5) de l'intérieur d'au moins une enveloppe de l'autre (6") de le même accumulateur de froid (4), par passage de l'agent de refroidissement (5) à travers cette dernière enveloppe (6") à l'intérieur de l'accumulateur de froid (4), cet agent de refroidissement est introduit (5) et l'agent de refroidissement (5) est évacué de l'extérieur de l'accumulateur de froid (4), respectivement par une entrée tubulaire (33') et une sortie tubulaire (33"), alimentant la seconde enveloppe (6") à partir du circuit thermique de congélation.

8. Procédé selon la revendication 7, **caractérisé en ce que** la formation de glace (7') se produit à proximité immédiate de la seconde enveloppe (6'), sous la forme d'un anneau de taille similaire, mais de dimension axiale plus grande par rapport à la seconde enveloppe (6'), il est ensuite refroidi par formation de glace (7') axialement vers l'extérieur de l'accumulateur de froid (4), tout en produisant des enveloppes successives de glace (7') d'une taille axiale croissante des anneaux par rapport à la taille axiale de la seconde enveloppe (6') de chaque accumulateur de froid (4).

9. Procédé selon la revendication 7 ou 8, **caractérisé en ce que** le passage forcé du circuit de l'agent de refroidissement (5) liquide à travers le réservoir (1) et/ou à travers l'intérieur de la seconde enveloppe (6") est effectué par écoulement laminaire, de préférence à un stade avancé du processus, et le passage forcé du circuit de l'agent de refroidissement (5) liquide à travers le réservoir (1) et/ou à travers l'intérieur de la seconde enveloppe (6") est effectué par un écoulement turbulent, de préférence à un stade précoce du procédé, dans lequel est utilisé comme agent de refroidissement (5) une solution d'eau glycolée ou une saumure ou un alcool ou sa solution, la température de l'agent de refroidissement (5) étant inférieure à -1°C, de préférence inférieure à - 6°C.

10. Procédé selon la revendication 7 ou 8 ou 9, **caractérisé en ce que** le jet lavant des premières enveloppes (6') des accumulateurs de froid (4) s'écoule à travers le réservoir (1) en serpentin, en spirale ou en labyrinthe, en utilisant les espaces entre les cloisons (20) verticales et/ou les espaces entre les cloisons (21) horizontales et/ou les espaces entre les entretoises (19) intérieurs et/ou les entretoises (18) extérieurs et/ou les espaces ajourés.

11. Procédé selon la revendication 7 ou 8 ou 9 ou 10, **caractérisé en ce que** la formation de glace (7') lors de l'accumulation de froid est effectuée à l'aide de microradicaux (28) de glace (7'), de préférence librement déplacés ou stationnaires, dans la première enveloppe (6') et/ou dans l'eau (7), laquelle la remplit, dans lequel le volume de microradicaux (28) de glace (7') est utilisé, de préférence n'étant pas supérieur à 5% du volume de la masse spatiale de la première enveloppe (6').

12. Utilisation du dispositif d'accumulation d'énergie, selon l'une quelconque des revendications 1-6, en particulier l'énergie de refroidissement, dans le cas d'une multiplication cyclique, c'est-à-dire de la formation et de la formation de glace, dans laquelle le dispositif est utilisé, **caractérisée en ce que** pendant la formation de froid, c'est-à-dire pendant la transformation de l'eau (7) en glace (7'), le même dispositif est utilisé pour évacuer le froid, c'est-à-dire que l'eau (7) est obtenue simultanément à partir de la glace accumulée (7') pendant la transformation inverse.

13. Utilisation du dispositif selon la revendication 12, **caractérisée en ce que** l'alimentation en froid utilise un agent de refroidissement (5) refroidi à une température inférieure à 0 °C et est acheminé à l'extérieur de l'enveloppe (6'), la récupération en froid utilisant un agent de refroidissement (5) utilisé précédemment et maintenant chauffé à une température supérieure à 0 °C, dans laquelle il doit être distribué à l'environnement intérieur d'au moins une seconde enveloppe (6"), de préférence pour la formation de glace (7') dans l'accumulateur de froid (4), la première enveloppe (6') est utilisée, et au moins une seconde enveloppe (6") est utilisée pour faire fondre la glace (7').

14. Utilisation du dispositif selon la revendication 12, **caractérisée en ce qu'**un agent de refroidissement réfrigéré (5) à une température inférieure à 0 °C est utilisé pour délivrer le froid, étant amené à l'environnement intérieur d'au moins une enveloppe de l'autre (6'), alors que la récupération du froid est déjà utilisée, l'agent de refroidissement chauffé (5) au-dessus de 0°C, acheminé vers l'environnement extérieur de la première enveloppe (6'), de préférence la formation de glace (7') dans l'accumulateur de froid (4), utilise au moins une autre enveloppe (6') et la première enveloppe (6') sert à faire fondre la glace (7').

15. Utilisation du dispositif selon la revendication 12 ou 13 ou 14, **caractérisée en ce que**, lors de la mise en oeuvre de changements dans un mode cyclique, de préférence quotidien, on utilise des interruptions périodiques en fonctionnement simultané, au cours desquelles le dispositif est utilisé dans le mode accélérateur de procédés classiques, accumulation complète accélérée de façon appropriée ou décharge complète accélérée, et dans ces intervalles périodiques on utilise un mode hybride.
